# EUROPÄISCHE PATENTSCHRIFT

(11) **EP 2 582 757 B1**
(45) Veröffentlichungstag und Bekanntmachung des Hinweises auf die Patenterteilung: **30.10.2019**
(21) Anmeldenummer: 11724651.2
(22) Anmeldetag: 14.06.2011
(51) Int. Cl.: C08L 67/04, C08J 3/00

(54) **VERFAHREN ZUR HERSTELLUNG VON BLENDS AUS POLYLACTIDEN (PLA) UND THERMOPLASTISCHEN POLYURETHANEN (TPU)**
PROCESS FOR THE PRODUCTION OF BLENDS OF POLYLACTIDES (PLA) AND THERMOPLASTIC POLYURETHANES (TPU)
PROCÉDÉ POUR LA PRODUCTION DE MÉLANGES DE POLYLACTIDES (PLA) ET DE POLYURÉTHANES THERMOPLASTIQUES (TPU)

(30) Priorität: 15.06.2010 EP 10166000
(43) Veröffentlichungstag der Anmeldung: 24.04.2013
(73) Patentinhaber: BASF SE, 67056 Ludwigshafen am Rhein (DE)
(72) Erfinder: HILMER, Klaus, 49448 Marl (DE); BRÜNING, Kai, 27232 Sulingen (DE); FRITZ, Hans-Gerhard, 73066 Uhingen (DE); ZGAVERDEA, Alina Corina, 70327 Stuttgart (DE)
(74) Vertreter: BASF IP Association
(86) Internationale Anmeldenummer: PCT/EP2011/059811
(87) Internationale Veröffentlichungsnummer: WO 2011/157691

(56) Entgegenhaltungen:
- EP-A1- 1 679 349
- EP-A2- 0 515 203
- US-A1- 2003 232 933
- DATABASE WPI Week 200962 Thomson Scientific, London, GB; AN 2009-N04905 XP002661125, & CN 101 508 831 A (SHENZHEN KEJU NEW MATERIAL CO LTD) 19. August 2009 (2009-08-19)
- YUAN Y ET AL: "POLYURETHANE TOUGHENED POLYLACTIDE", POLYMER BULLETIN, SPRINGER, HEIDELBERG, DE, Bd. 40, Nr. 4/05, 1. April 1998 (1998-04-01), Seiten 485-490, XP000750414, ISSN: 0170-0839, DOI: 10.1007/S002890050280
- DATABASE WPI Week 200925 Thomson Scientific, London, GB; AN 2009-G51265 XP002661126, & JP 2009 067923 A (DOKURITSU GYOSEI HOJIN SANGYO GIJUTSU SO) 2. April 2009 (2009-04-02)
- DATABASE WPI Week 200676 Thomson Scientific, London, GB; AN 2006-728841 XP002661127, & CN 1 760 237 A (UNIV DONGHUA) 19. April 2006 (2006-04-19)
- DATABASE WPI Week 200969 Thomson Scientific, London, GB; AN 2009-N52014 XP002661128, & CN 101 519 527 A (SHANGDONG WEIGAO GROUP MEDICAL POLYMER P) 2. September 2009 (2009-09-02)
- DATABASE WPI Week 200249 Thomson Scientific, London, GB; AN 2002-456781 XP002661129, & JP 2002 037995 A (SHIMADZU CORP) 6. Februar 2002 (2002-02-06)
- LOH ET AL: "Biodegradable thermogelling poly(ester urethane)s consisting of poly(lactic acid) - Thermodynamics of micellization and hydrolytic degradation", BIOMATERIALS, ELSEVIER SCIENCE PUBLISHERS BV., BARKING, GB, Bd. 29, Nr. 14, 13. Februar 2008 (2008-02-13), Seiten 2164-2172, XP022513842, ISSN: 0142-9612, DOI: 10.1016/J.BIOMATERIALS.2008.01.016

## Beschreibung

Die Erfindung betrifft ein Verfahren zur Herstellung von Blends aus Polylactiden und thermoplastischen Polyurethanen, derart erhaltene Blends sowie die aus derartigen Blends hergestellten Flächenprodukte und Formkörper
Die Polymilchsäure bzw. das Polylactid (PLA) ist ein Thermoplast, der aus nachwachsenden Rohstoffen gewonnen werden kann und somit der Forderung nach einer nachhaltigen Produktion von Polymerwerkstoffen gerecht wird. PLA-Werkstoffe entspringen einer Polykondensationsreaktion, ausgehend von Milchsäure oder einer Ringöffnungspolymerisationsreaktion, ausgehend von dem Dimeren der Milchsäure, dem Lactid. Bei dem letztgenannten Syntheseweg wird von L-Lactid oder von einem Gemisch aus L- und D-Lactiden, den Stereoisomeren des Lactids, ausgegangen. Das aus L-Lactid synthetisierte Poly-L-Lactid (PLLA) ist ein sehr harter und spröder Werkstoff mit einem Elastizitätsmodul von E ≈ 4.000 MPa. Für viele Anwendungsfälle wünscht man sich jedoch eine größere Flexibilität und Duktilität. Diesem Wunsch trägt der Rohstoffhersteller dadurch Rechnung, dass er, ausgehend von einer L-/D-Lactidmischung (z. B. 92 : 8 %) die PLDA-Lactide polymerisiert, wobei mit größer werdendem D-Lactid-Anteil die Kristallitschmelztemperatur und die Kristallisationsgeschwindigkeit drastisch abfallen. Die Gebrauchseigenschaften verschlechtern sich dadurch merklich.

Polyurethane und insbesondere thermoplastische Polyurethane sind bereits seit langem bekannt und haben ein vielfältiges Anwendungsfeld gefunden. So werden Polyurethane beispielsweise in der Schuh- und Automobilindustrie, für Folien, Kabelummantelungen oder in Freizeitartikeln eingesetzt, sowie in vielfältiger Weise auch als Blendkomponente.

Die Aufbereitung von Polylactiden mit Polyurethanen zu Blends ist an sich bekannt.

EP-A 1 679 349 betrifft Polymerzusammensetzungen, die neben Polylactiden spezielle Polyurethane enthalten, die Polyetherdiole als Alkoholkomponente enthalten. Es handelt sich beispielsweise um Poly(ethylvinylether) mit terminalen Hydroxylgruppen. Zur Herstellung werden diese speziellen Poly(ethylvinylether) mit Polylactiden und Diisocyanaten beispielsweise in einem Extruder umgesetzt. Einen Teil der erhaltenen Folien war dabei transparent und farblos.

JP-A-2008 308599 betrifft Polymerpulver, die Polylactide enthalten. Zu ihrer Herstellung werden Polylactidpolymere und Polymerpolyole vermischt und nachfolgend mit Diisocyanat umgesetzt. Als Polymerpolyol kommen beispielsweise Polyetherdiole, Polyesterdiole und Polysiloxanglycole wie auch Polybutadienglycol in Betracht.

In WO 2009/022076 betrifft thermoplastische Materialien, die nachvernetzbar sind, nachdem eine Formgebung durchgeführt wurde. Beispielsweise können Polyester zusammen mit Polyol und Diisocyanat gleichzeitig in einen Extruder geführt werden. Unter den einsetzbaren polaren thermoplastischen Polymeren werden auch Polylactide genannt.

Die erhaltenen Systeme haben nicht für alle Anwendungen ein geeignetes Eigenschaftsprofil. Insbesondere die Sprödigkeit des Polylactids und sein niedriger Schmelzpunkt führen häufig zu mäßigen anwendungstechnischen Eigenschaften. Für den Polymerverarbeiter ist es deshalb wichtig, durch die mechanischen Eigenschaften, insbesondere den E-Modul und die Dehnbarkeit der Blends, exakt auf den jeweiligen Einsatzfall abstimmen zu können.

Aufgabe der vorliegenden Erfindung ist die Bereitstellung von Blends aus Polylactiden (PLA) und thermoplastischen Polyurethanen (TPU), die eine verbesserte Zähigkeit bei einer Verminderung der Sprödigkeit zeigen, und zudem erhöhte Reißdehnungen bei ausreichender Festigkeit aufweisen. Die Blends sollen insbesondere zur Herstellung von Flächenprodukten (dünne Folien, Platten, etc.), Formkörper und extrudierten Halbzeugen (Rohre, Profile, etc.) geeignet sein.

Gesucht ist insbesondere ein Verfahren, mit dem der Kunststoffverarbeiter den Elastizitätsmodul der PLA-Rezeptur im Zuge eines vorgeschalteten oder integrierten Compoundierprozesses, d.h. einem Einstufenprozess, auf das jeweilige Endprodukt exakt abstimmen kann, ohne dass die PLA-Eigenschaften selbst nachteilig verändert würden. Die Compoundadaption soll durch die Inkorporierung eines Flexibilisators erfolgen. Zentrale Aufgabe dabei ist, für die beiden polymeren thermoplastischen Komponenten, nämlich für das PLA und den Flexibilisator, eine effiziente Kompatibilisierungsstrategie bzw. ein funktionsfähiges Kompatibilisierungskonzept zu finden, das eine Delamination der Blendkomponenten unter allen äußeren Beanspruchungen und Medieneinwirkungen ausschließt und das eine Phasenseparierung im Zuge der Blendverarbeitung oder beim beanspruchten Bauteil verhindert.

Derartige Blends, bestehend aus PLA und einem Flexibilisator, sollen sich im Vergleich mit reinem PLA bzw. Poly-L-Lactid (PLLA) durch eine verbesserte Zähigkeit, eine verminderte Sprödigkeit sowie durch eine erhöhte Reißdehnung auszeichnen.

Ferner sollen sie eine erhöhte Kerbschlagzähigkeit und Durchstoßfestigkeit aufweisen und zudem eine bessere Entformbarkeit sowie kürzere Zykluszeiten gewährleisten. Sie sollen sich mit den gebräuchlichen Kunststoffverarbeitungsverfahren, wie z. B. der Extrusion, des Spritzgießens, des Blasformens, des Formpressens, des Rotationssinterns und des Thermoformens zu Halbzeugen und Formteilen ausformen lassen.

Die Aufgabe wird erfindungsgemäß gelöst durch ein Verfahren zur Herstellung von Blends aus Polylactiden (PLA) und thermoplastischen Polyurethanen (TPU), durch
Stufe A) Umsetzung mindestens eines thermoplastischen Polyurethans mit mindestens einem Diisocyanat oder einem Isocyanat - Prepolymer, das mindestens zwei Isocyanatgruppen aufweist, oder Gemische davon, in der Schmelze unter Verminderung der Molmasse des thermoplastischen Polyurethans und unter Ausbildung eines thermoplastischen Polyurethans mit einem Überschuss an Isocyanat-Endgruppen,
Stufe B) Einbringen mindestens eines Polylactids in die Schmelze des Produktes der Stufe A) und Umsetzung des Produktes der Stufe a) mit dem Polylactid bei einer Temperatur von unter unter 190 °C, weiter bevorzugt unter 185 °C, und besonders bevorzugt unter 180 °C, wobei der Anteil des Polylactids im Gemisch der Stufe B) 50 bis 97 Gew.-% beträgt,
Stufe C) Abkühlen des so gebildeten Blends,
wobei in den Stufen A) bis C) keine Polyole zugesetzt werden, und
wobei die Gesammtkennzahl des thermoplastichen Polyurethans 1,0 bis 1,2 beträgt.

Die Aufgabe wird ferner dadurch gelöst, dass in die Blends, bestehend aus Polylactiden (PLA) und thermoplastischen Polyurethanen (TPU) Verstärkungsstoffe (unterschiedlichste Fasern und/oder nadel- oder plättchenförmige Mineralien (z.B. Wollastenit, Glimmer, Talkum, etc.) eincompoundiert werden. Bei den erfindungsgemäßen PLA/TPU-Blends handelt es sich um Zweiphasenwerkstoffe, bei denen das PLA die kontinuierliche und das TPU die disperse Phase darstellen.

Die Aufgabe wird zudem gelöst durch die Verwendung der vorstehend beschriebenen Blends zur Herstellung von Flächenprodukten, extrudierten Halbzeugen oder Formkörpern. Die Erfindung betrifft auch Folien oder Formkörper aus einem entsprechenden Blend, in welchem weiter bevorzugt Verstärkungsstoffe eincompoundiert sind, sowie daraus hergestellte Formkörper und Halbzeuge.

Überraschend wurde gefunden, dass Blends aus thermoplastischen Polyurethanen und Polylactiden mit verbesserten Anwendungseigenschaften hergestellt werden können, wenn ein thermoplastisches Polyurethan zunächst mit einem Diisocyanat, einem Prepolymer, das mindestens zwei Isocyanatgruppen aufweist, oder einem Gemisch davon in der Schmelze zur Verminderung der Molmasse des thermoplastischen Polyurethans umgesetzt wird. Das so ausgebildete kürzerkettige thermoplastische Polyurethan mit einem Überschuss an Isocyanat-Endgruppen kann dann nach dem Einbringen des Polylactids und nach dessen Aufschmelzen mit diesem reagieren, wobei es zur Ausbildung kovalenter Bindungen mit den Isocyanat-Endgruppen kommt. Dadurch ergibt sich eine herausragende Kompatibilisierung der beiden Polymerphasen, sowie eine exzellente Morphologiestabilität. Durch die Rezeptierung des Gesamtsystems und die Art der Prozessführung kann das Eigenschaftsspektrum für die jeweilige Anwendung gezielt eingestellt werden. Die erfindungsgemäß hergestellten Blends weisen eine verminderte Sprödigkeit gegenüber dem nicht als Blend vorliegenden Polylactid auf. Die Zähigkeit, Reißdehnung und Schlagzähigkeit werden signifikant erhöht.

Die Aufgabe wird insbesondere dadurch gelöst, dass als Flexibilisatoren thermoplastische Polyurethane (TPU) eingesetzt werden, die in einem reaktiven Compoundierungsprozess mit dem PLA bzw. PLLA kovalent verknüpft werden. Das Ergebnis sind Zweiphasenwerkstoffe, bei denen das PLA, wie erwähnt, die kontinuierliche und das TPU die diskontinuierliche bzw. disperse Phase bilden. Eine derartige Morphologie wird vorzugsweise dann erhalten, wenn die beiden Basiskomponenten in den Masseverhältnissen PLA : TPU = 97 : 3 bis 50 : 50 Gew.-% miteinander vermischt werden. Der reaktive Blendprozess wird bevorzugt in Doppelschneckenextrudern oder in BUSS-Koknetern oder in ähnlichen Kunststoffaufbereitungsaggregaten durchgeführt werden.

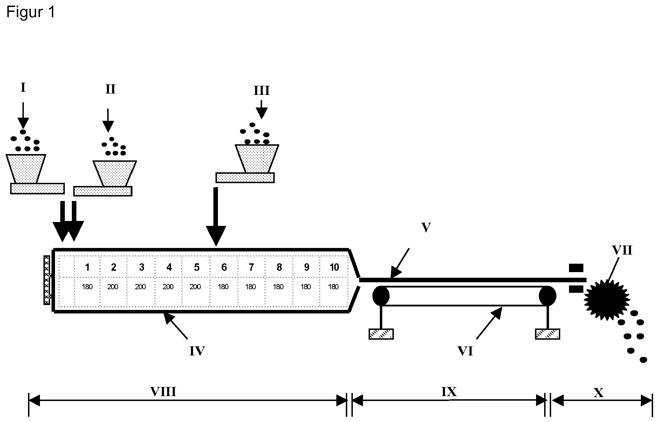

Figur 1 zeigt einen bevorzugten Compoundierprozess auf einem Doppelschneckenextruder (IV), der bevorzugt vom Typ Coperion ZSK 25 (L/D = 42) des Hersteller: Werner & Pfleiderer ist. TPU (I) wird mit festen und/oder flüssigen Additiven (II) dem Extruder (IV) zugeführt. Der Extruder (IV) hat in einer bevorzugten Ausführungsform verschiedene Temperaturbereichet 1 bis 10, die in der aufsteigenden auf folgende Temperaturen eingestellt sind: 1: 180 °C, 2: 200°C, 3: 200 °C, 4: 200°C, 5: 200°C, 6: 180°C, 7: 180 °C, 8: 180 °C, 9: 180 °C, 10: 180 °C. Bevorzugt wird das PLA Mahlgut (III) so dem Extruder zugeführt, dass die Temperatur im Extruder unter 190 °C liegt. Das aus TPU und PLA bestehende compoundierte Material (V) wird von einem Luftkühler (VI) abgekühlt bevor es durch einen Granulierer (VII) in thermoplastisches Granulat zerkleinert wir. Der Bereich der Compoundierung (VIII) befindet sich im Bereich des Doppelpfeiles (VIII), die Abkühlung erfolgt im Bereich des Doppelpfeiles (IX) und die Granulierung im Bereich des Doppelpfeiles (X).

Das erfindungsgemäße Verfahren zur Herstellung von PLA/TPU-Blends ist durch drei Verfahrensteilschritte gekennzeichnet, auch als Stufe A, B oder C bezeichnet:
Stufe A) Bei dem ersten Verfahrensteilschritt handelt es sich um die Umsetzung mindestens eines thermoplastischen Polyurethans mit mindestens einem Diisocyanat oder einem Prepolymer, das mindestens zwei Isocyanatgruppen aufweist, in der Schmelze unter Reduktion der Molmasse des thermoplastischen Polyurethans mit einem Überschuss an Isocyanat-Endgruppen.
   Eine besonders geeignete Prepolymerrezeptur kann aus NCO-terminierten Polyestern und aus bifunktionellen Isocyanaten (z. B. MDI) bestehen.
Stufe B) Bei dem zweiten Verfahrensteilschritt handelt es sich um die Einarbeitung eines Polylactids (PLA) in die Schmelze des Produktes des Verfahrensschrittes A und um die Umsetzung des Produktes gemäß A mit dem Polylactid bei einer Temperatur kleiner als 190 °C, bevorzugt kleiner als 185 °C und besonders bevorzugt kleiner als 180 °C.
   Die Kompatibilisierung der beiden Polymerkomponenten erfolgt durch eine Verknüpfung der im Verfahrensschritt A gebildeten Kettenfragmente mit den jeweils eine OH-Endgruppe tragenden Polylactidbausteinen.
Stufe C) Der dritte Verfahrensteilschritt umfasst die Formgebung und Abkühlung oder die Granulierung des PLA/TPU-Blends.

Es wurde gefunden, dass Polymerblends aus Polylactiden und thermoplastischen Polyurethanen mit endproduktadaptierten Eigenschaften hergestellt werden können, wenn ein thermoplastisches Polyurethan zunächst mit einem Diisocyanat, einem Prepolymer, das mindestens zwei Isocyanatgruppen aufweist oder einem Gemisch davon in der Schmelze zum Abbau der Molmasse des thermoplastischen Polyurethans vorzugsweise bei Temperaturen über 140 °C umgesetzt wird. Das so gebildete kürzerkettige, thermoplastische Polyurethan mit einem Überschuss an Isocyanat-Endgruppen kann dann beim Einbringen des PLA mit den OH-Endgruppen des Polylactids reagieren, wobei es zur Ausbildung kovalenter Bindungen mit den NCO-Gruppen kommt. In dem erzeugten Polymerblend liegen demnach kovalent gekoppelte Polylactid- und Polyurethanketten vor.

Damit sind die erfindungsgemäßen durch Rezeptierung und Prozess variabel in den Eigenschaften abstimmbaren Blends insbesondere geeignet zur Herstellung dünner Folien, wie sie beispielsweise für Verpackungen und Müllbeutel verwendet werden.

Darüber hinaus ist es auch möglich, Formkörper aus den Blends herzustellen, beispielsweise für technische Bauteile, Haushaltsgegenstände oder Spielzeug, die dann auch bevorzugte Ausführungsformen sind.

Die Aufgabe wird weiterhin gelöst durch die Verwendung der vorstehend beschriebenen Zweiphasenwerkstoffe zur Herstellung von extrudierten Halbzeugen, spritzgegossenen oder pressgeformten Formteilen und rotationsgeformten Bauteilen.

Im Compoundierungsprozess können in bevorzugten Ausführungsformen Fasern aller Art zugegeben werden. Damit sind weitere Eigenschaftsprofile darstellbar. Eine direkte Formgebung (Einstufenprozess) des faserverstärkten Blends bedingt keinen zusätzlichen thermisch materialschädigenden Verarbeitungsschritt. Bevorzugte Fasern sind Glasfasern, Naturfasern (Flachs, Hanf, Baumwolle, Sisal, Bambus Kenaf, sowie Cellulosefasern usw. Der Anteil im Compound beträgt vorzugsweise mehr als 1 Gew.-%, besonders bevorzugt 5 Gew.-% bis 30 Gew.-%.

Durch den chemischen Aufbau der eingesetzten thermoplastischen Polyurethane können die Material- und Anwendungseigenschaften weiterhin modifiziert werden. Beispielsweise können thermoplastische Polyurethane aus nachwachsenden Rohstoffen bevorzugt Sebazinsäure und Polyolen hergestellt werden.

Es können thermoplastische Polyurethane verwendet werden, die keine aromatischen Gruppen aufweisen. Beide Varianten können verknüpft werden, so dass auch die Polyolbasis des TPU nicht-aromatisch ist und auf nachwachsenden Rohstoffen basiert. Ein verbesserter Hydrolyseschutz kann durch Einsatz von Polyetherdiolen im thermoplastischen Polyurethan erreicht werden. Ein entsprechendes Polyether-Prepolymer zeigt eine deutlich verbesserte Hydrolysebeständigkeit.

Im erfindungsgemäßen Verfahren beträgt der Anteil des Polylactids im Gemisch der Stufe B) 50 Gew.-% bis 97 Gew.-%, besonders bevorzugt 60 Gew.-% bis 92 Gew.-%.

In Stufe A) können in das thermoplastische Polyurethan beliebige geeignete Mengen an einem Diisocyanat oder einem Diisocyanat - Prepolymer, die jeweils mindestens zwei Isocyanatgruppen aufweisen, oder Gemische davon eingebracht werden. Bevorzugt beträgt der Anteil an Diisocyanat, Prepolymer oder Gemisch davon 1 Gew.-% bis 25 Gew.-%, besonders bevorzugt 1 Gew.-% bis 10 Gew.-%, bezogen auf das Produkt der Stufe A).

Eine besonders geeignete Prepolymerrezeptur basiert auf NCO-terminierten Polyestern und auf bifunktionellen Isocyanaten, z. B. MDI, das bevorzugt ist.

Die Umsetzungen in den Stufen A), B) und C) können kontinuierlich oder diskontinuierlich durchgeführt werden.

Bevorzugt ist ein kontinuierliches Verfahren, das insbesondere als Reaktionsextrusion ausgebildet wird. Dabei wird das Verfahren in einem Extruder, vorzugsweise in einem Zweischneckenextruder, durchgeführt, wobei das thermoplastische Polyurethan und das Diisocyanat, Isocyanat-Prepolymer oder Gemisch davon am Eingang des Extruders zugesetzt werden, während das Polylactid stromabwärts zugesetzt wird.

Im erfindungsgemäßen Verfahren können beliebige geeignete thermoplastische Polyurethane (TPU) eingesetzt werden, die in der Regel erhältlich sind aus wenigstens einem Diisocyanat, wenigstens einem Polyol und häufig wenigstens einem Isocyanat-reaktiven Kettenverlängerer.

Unter thermoplastischen Polyurethanen TPU werden Polyurethane verstanden, die in einem bestimmten Temperaturbereich wiederholt in der Wärme erweichbar sind und beim Abkühlen verfestigen und im erweichten Zustand wiederholt durch Gießen, Spritzgießen, Extrudieren, Blasformen, Pressen und Rotationssintern zu Halbzeug oder Formteilen formbar sind. Bei den TPU handelt es sich um multiple Blockcopolymere; diese besitzen innerhalb eines Moleküls Hart- und Weichsegmente. In einer bevorzugten Ausführungsform beträgt der Anteil der Hartphase am gesamten TPU vorzugsweise 15 Gew.-% bis 65 Gew.-%, insbesondere 40 Gew.-% bis 65 Gew.- % bei aliphatischem TPU.

Erfindungsgemäß erfolgt die Herstellung der thermoplastischen Polyurethane durch Umsetzung von Diisocyanaten, die auch als Komponente a) bezeichnet werden, mit Polydiolen und gegebenenfalls weiteren gegenüber Isocyanaten reaktiven Verbindungen, auf die gemeinsam auch als Komponente b) Bezug genommen wird, und Kettenverlängerungsmitteln, die auch als Komponente c) angespreochen werden,gegebenenfalls in Gegenwart von Katalysatoren, die auch als Komponente d) angesprochen werden, und/oder üblichen Hilfsstoffen, die auch als Komponente e) angesprochen werden. Die Herstellung kann bevorzugt durch Polyaddition in den üblichen kontinuierlichen Prozessen sowie, alternativ, diskontinuierlich erfolgen.

Die bei der Herstellung der Polyurethane üblicherweise verwendeten Komponenten a), b), c) sowie gegebenenfalls d) und/oder e) sollen im Folgenden beispielhaft beschrieben werden:
a) Als organische Isocyanate, Komponente a), können allgemein bekannte aromatische, aliphatische, cycloaliphatische und/oder araliphatische Isocyanate, bevorzugt Diisocyanate eingesetzt werden, weiter bevorzugt 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat, Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1-Isocyanato-4-[(4-isocyanatocyclohexyl) methyl]cyclohexan (H12MDI), 2,6-Diisocyanatohexancarbonsäureester, 1,4- und/oder 1,3-Bis(isocyanatomethyl)-cyclohexan (HXDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethandiisocyanat, bevorzugt 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Hexamethylendiisocyanat, 1-lsocyanato-4-[(4-isocyanatocyclohexyl) methyl]cyclohexan, und/oder IPDI.
   Besonders bevorzugte Isocyanate sind aliphatische Isocyanate, weiter bevorzugt Hexamethylendiisocyanat und insbesondere H12MDI.
b) Als gegenüber Isocyanaten reaktive Verbindungen, Komponente b) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden, mit Molekulargewichten (Mn), bevorzugt zahlenmittleren Molekulargewichten zwischen 500 [g/mol] und 8000 [g/mol], bevorzugt 600 [g/mol] bis 6000 [g/mol], insbesondere 800 [g/mol] bis weniger als 3000 [g/mol], und bevorzugt einer mittleren Funktionalität gegenüber Isocyanaten von 1,8 bis 2,3, bevorzugt 1,9 bis 2,2, insbesondere 2.
   Bevorzugt setzt man als Komponente b) Polyetherpolyole ein, beispielsweise solche auf der Basis von allgemein bekannten Startersubstanzen und üblichen Alkylenoxiden, bevorzug Ethylenoxid, Propylenoxid und/oder Butylenoxid, weiter bevorzugt Polyetherole basierend auf Propylenoxid-1,2 und Ethylenoxid und insbesondere Polyoxytetramethylenglykole. Weiterhin können als Polyetherole bevorzugt sogenannte niedrig ungesättigte Polyetherole verwendet werden. Unter niedrig ungesättigten Polyolen werden im Rahmen dieser Erfindung insbesondere Polyetheralkohole mit einem Gehalt an ungesättigten Verbindungen von kleiner als 0,02 meq/g, bevorzugt kleiner als 0,01 meq/g, verstanden. Derartige Polyetheralkohole werden zumeist durch Anlagerung von Alkylenoxiden, insbesondere Ethylenoxid, Propylenoxid und Mischungen daraus, an die oben beschriebenen Diole oder Triole in Gegenwart von hochaktiven Katalysatoren hergestellt.
   Derartige hochaktive Katalysatoren sind bevorzugt Cäsiumhydroxid und Multimetallcyanidkatalysatoren, auch als DMC-Katalysatoren bezeichnet. Ein häufig und bevorzugt eingesetzter DMC-Katalysator ist das Zinkhexacyanocobaltat. Der DMC-Katalysator kann nach der Umsetzung im Polyetheralkohol belassen werden, üblicherweise wird er entfernt, beispielsweise durch Sedimentation oder Filtration.
   Statt eines Polyols können auch Mischungen verschiedener Polyole als Komponente b) eingesetzt werden. Besonders bevorzugt basiert das erfindungsgemäße thermoplastische Polyurethan auf Polytetrahydrofuran mit einem Molekulargewicht (Mn), bevorzugt dem zahlenmittleren Molekulargewicht, zwischen 600 g/mol und 2000 g/mol, bevorzugt 800 g/mol und 1400 g/mol, besonders bevorzugt 950 g/mol und 1050 g/mol als Komponente b).
c) Als Kettenverlängerungsmittel, Komponente c, können allgemein bekannte aliphatische, araliphatische, aromatische und/oder cycloaliphatische Verbindungen mit einem Molekulargewicht, bevorzugt mittleren Molekulargewicht von 50 g/mol bis 499 g/mol, bevorzugt 2-funktionelle Verbindungen, eingesetzt werden. Bevorzugt sind beispielsweise Alkandiole mit 2 bis 10 C-Atomen im Alkylenrest, bevorzugt Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, weiter bevorzugt unverzweigte Alkandiole, insbesondere Propan-1,3-diol und Butan-1,4-diol.
d) Geeignete Katalysatoren, Komponente d), welche insbesondere die Reaktion zwischen den NCO-Gruppen der Diisocyanate, Komponente a) und der Komponente b) beschleunigen, sind die nach dem Stand der Technik bekannten und üblichen tertiären Amine, wie z. B. bevorzugt Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z. B. bevorzugt Eisen-(III)-acetylacetonat, Zinnverbindungen, z. B. bevorzugt Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,00001 Gew.-Teilen bis 0,1 Gew.-Teilen pro 100 Gew.-Teile Polyhydroxylverbindung, Komponente b) eingesetzt.
e) Neben Katalysatoren, Komponente d), können den Aufbaukomponenten a) bis c) auch übliche Hilfsmittel, Komponente e), hinzugefügt werden. Genannt seien beispielsweise Treibmittel, oberflächenaktive Substanzen, Flammschutzmittel, Keimbildungsmittel, Gleit- und Entformungshilfen, Farbstoffe und Pigmente, Stabilisatoren, z. B. bevorzugt gegen Hydrolyse, Licht, Hitze oder Verfärbung, anorganische und/oder organische Füllstoffe, Verstärkungsmittel, Weichmacher und Metalldeaktivatoren. Als Hydrolyseschutzmittel werden bevorzugt oligomere und/oder polymere aliphatische oder aromatische Carbodiimide verwendet.

In einer bevorzugten Ausführungsform werden aber derartige Hilfsmittel nicht oder nur in einer Menge von vorzugsweise von maximal 1 %, insbesondere von maximal 0,1 %, bezogen auf das thermoplastische Polyurethan inklusive der Additive verwendet.

Besonders bevorzugt sind TPU auf Basis von hydriertem MDI und wenigstens eines Polyetherols mit einem maximalen Anteil von 25 Gew.-%, bevorzugt maximal 10 Gew.-% an Aromaten und konjugierten π-Elektronen-Systemen, bezogen auf das thermoplastische Polyurethan inklusive gegebenenfalls anwesender Additive, insbesondere TPU unter Ausschluss aromatischer Verbindungen.

Die Herstellung der TPU kann nach den bekannten Verfahren diskontinuierlich oder kontinuierlich, beispielsweise mit Reaktionsextrudern oder dem Bandverfahren nach one-shot oder dem Prepolymerverfahren, bevorzugt nach dem one-shot-Verfahren erfolgen. Bei diesen Verfahren können die zur Reaktion kommenden Komponenten a), b) und gegebenenfalls c), d) und/oder e) nacheinander oder gleichzeitig miteinander vermischt werden, wobei die Reaktion unmittelbar einsetzt. Beim Extruderverfahren werden die Aufbaukomponenten a), b) sowie gegebenenfalls die weiteren Komponenten c), d) und/oder e) einzeln oder als Gemisch in den Extruder eingeführt, z. B. bevorzugt bei Temperaturen von 100 bis 280°C, weiter bevorzugt bei 140 °C bis 250°C zur Reaktion gebracht, das erhaltene Polyurethan wird dann extrudiert, abgekühlt und granuliert.

Zur Optimierung der TPU können die Polyolkomponente, Komponete b), und Kettenverlängerer, Komponente c) variiert werden. In einer bevorzugten Ausführungsform wird ein Gewichtsverhältnis von Polyol, Komponente b) zu insgesamt einzusetzenden Kettenverlängerungsmitteln, Komponente c) von 20 bis 2, insbesondere von 8 bis 3 eingestellt.

Die Umsetzung des Isocyanates, Komponente a) mit den Isocyanat-reaktiven Komponenten b) und ggf. c)erfolgt in einer bevorzugten Ausführungsform bei einer Kennzahl zwischen 950 und 1050, besonders bevorzugt zwischen 970 und 1010, insbesondere zwischen 980 und 1000. Hierbei ist die Kennzahl definiert durch das Verhältnis der insgesamt bei der Umsetzung eingesetzten Isocyanatgruppen der Komponente a) zu den Isocyanat-reaktiven Gruppen, also insbesondere den Gruppen der Komponenten b) und c). Bei einer Kennzahl von 1000 kommt auf eine Isocyanatgruppe der Komponente a) ein aktives Wasserstoffatom. Bei Kennzahlen über 1000 liegen mehr Isocyanatgruppen als OH-Gruppen vor.

Um die Polyurethane gegen Alterung zu stabilisieren, können dem Polyurethan Stabilisatoren zugegeben werden. Stabilisatoren im Sinne der vorliegenden Erfindung sind Additive, die einen Kunststoff oder eine Kunststoffmischung gegen schädliche Umwelteinflüsse schützen. Beispiele sind primäre und sekundäre Antioxidantien, Thiosynergisten, Organophosphorverbindungen des trivalenten Phosphors, Hindered Amine Light Stabilizer, UV-Absorber, Hydrolyseschutzmittel, Quencher und Flammschutzmittel. Beispiele für kommerzielle Stabilisatoren sind gegeben in Plastics Additive Handbook, 5th Edition, H. Zweifel, ed., Hanser Publishers, München, 2001 ([1]), S.98-S.136. Ist das erfindungsgemäße Polyurethan während seiner Anwendung thermoxidativer Schädigung ausgesetzt, können Antioxidantien zugegeben werden. Bevorzugt werden phenolische Antioxidantien verwendet. Beispiele für phenolische Antioxidantien sind gegeben in Plastics Additive Handbook, 5th edition, H. Zweifel, ed, Hanser Publishers, München, 2001, S.98-S.107 und S 116-S. 121. Bevorzugt sind solche phenolische Antioxidantien, deren zahlenmittleres Molekulargewicht größer als 700 g/mol ist. Ein Beispiel für ein bevorzugt verwendetes phenolisches Antioxidans ist Pentaerythrityltetrakis (3-(3,5-bis(1,1-dimethylethyl)-4-hydroxyphenyl)propionate) (Irganox® 1010) oder andere hochmolekularere Kondensationsprodukte aus entsprechenden Antioxidantien. Die phenolischen Antioxidantien werden im allgemeinen in Konzentrationen zwischen 0,1 Gew.-% und 5 Gew.-% eingesetzt, bevorzugt zwischen 0,1 Gew.-% und 2 Gew.-%, insbesondere zwischen 0,5 Gew.-% und 1,5 Gew.-%, jeweils bezogen auf das Gesamtgewicht des Polyurethans. Weiterhin werden bevorzugt Antioxidantien verwendet, die amorph oder flüssig sind. Auch wenn die erfindungsgemäße Polyurethane aufgrund ihrer bevorzugten Zusammensetzung deutlich stabiler gegen ultravioletter Strahlung sind als z. B. mit Phthalaten oder Benzoaten weichgemachte Polyurethane, so ist eine Stabilisierung enthaltend nur phenolische Stabilisatoren oft nicht ausreichend. Aus diesem Grund werden die erfindungsgemäßen Polyurethane, die UV-Licht ausgesetzt werden, bevorzugt zusätzlich mit einem UV-Absorber stabilisiert. UV-Absorber sind Moleküle, die energiereiches UV-Licht absorbieren und die Energie dissipieren. Gängige UV-Absorber, welche in der Technik Verwendung finden, gehören z. B. bevorzugt zur Gruppe der Zimtsäureester, der Diphenylcyanacrylate, der Oxalsäureamide (Oxanilide), insbesondere 2-Ethoxy-2'-ethyloxanilid, der Formamidine, der Benzylidenemalonate, der Diarylbutadiene, Triazine sowie der Benzotriazole. Beispiele für kommerzielle UV-Absorber finden sich in Plastics Additive Handbook, 5th edition, H. Zweifel, ed, Hanser Publishers, München, 2001, Seiten 116-122. In einer bevorzugten Ausführungsform weisen die UV-Absorber ein zahlenmittleres Molekulargewicht von größer als 300 g/mol, insbesondere größer als 390 g/mol, auf. Ferner sollten die bevorzugt verwendeten UV-Absorber ein zahlenmittleres Molekulargewicht von nicht größer als 5000 g/mol, besonders bevorzugt von nicht größer als 2000 g/mol aufweisen. Besonders geeignet als UV-Absorber ist die Gruppe der Benzotriazole. Beispiele für besonders geeignete Benzotriazole sind Tinuvin® 213, Tinuvin® 328, Tinuvin® 571, sowie Tinuvin® 384 und das Eversorb®82. Bevorzugt werden die UV-Absorber in Mengen zwischen 0,01 Gew.-% und 5 Gew.-%, bezogen auf die Gesamtmasse Polyurethan zudosiert, besonders bevorzugt zwischen 0,1 Gew.-% und 2,0 Gew.-%, insbesondere zwischen 0,2 Gew.-% und 0,5 Gew.-%, jeweils bezogen auf das Gesamtgewicht des Polyurethans. Oft ist eine oben beschriebene UV-Stabilisierung basierend auf einem Antioxidans und einem UV-Absorber noch nicht ausreichend, um eine gute Stabilität des erfindungsgemäßen Polyurethans gegen den schädlichen Einfluss von UV-Strahlen zu gewährleisten. In diesem Falle kann zu der Komponente E bevorzugt zusätzlich zu dem Antioxidans und dem UV-Absorber, noch ein Hindered-Amine Light Stabilizer (HALS) zugegeben werden. Eine besonders bevorzugte UV-Stabilisierung enthält eine Mischung aus einem phenolischen Stabilisator, einem Benzotriazol und einer HALS-Verbindung in den oben beschriebenen bevorzugten Mengen. Es können aber auch Verbindungen eingesetzt werden, die die funktionellen Gruppen der Stabilisatoren vereinigen wie zum Beispiel sterische gehinderte Piperidylhydroxybenzyl-Kondensationsprodukte wie zum Beispiel Di-(1,2,2,6,6-pentamethyl-4-piperidyl)-2-butyl-2-(3,5-di-tert-butyl-4-hydroxybenzyl)malonate, Tinuvin® 144.

Besonders geeignet sind auch Wachse, die sowohl bei der technischen Herstellung der Polyurethane als auch bei ihrer Verarbeitung wichtige Aufgaben übernehmen. Das Wachs dient als friktionsminderndes inneres und äußeres Gleitmittel und verbessert so die Fliesseigenschaften des Polyurethans. Zusätzlich soll es als Trennmittel das Ankleben des Polyurethans an das umgebende Material (z. B. das Werkzeug) verhindern, und als Dispergator für andere Zusatzstoffe, z. B. Pigmente und Antiblockmittel, wirken. Geeignet sind z. B. Fettsäureester, wie Stearinsäureester und Montansäureester und deren Metallseifen, daneben Fettsäureamide, wie Stearylamide und Ölsäureamide, oder auch Polyethylenwachse. Eine Übersicht der in Thermoplasten eingesetzten Wachse findet sich in H. Zweifel (Ed.): Plastics Additives Handbook, 5. Ausgabe, Hanser Verlag, München 2001, S. 443 ff., EP-A 308 683, EP-A 670 339 und JP-A 5 163 431.

Verbesserungen können auch durch den Einsatz von Ester- und Amidkombinationen gemäß DE-A 19 607 870 und durch den Einsatz von speziellen Wachs-Mischungen von Montansäure- und Fettsäurederivaten (DE-A 19 649 290) erzielt werden, weiterhin durch die Verwendung von Hydroxy-Stearylsäureamide gemäß DE 102006009096 A1.

In einer besonders bevorzugten Ausführungsform werden Fettsäuren gemäß DE-A-19706452 mit 24 bis 34 Kohlenstoffatomen und/oder Ester und/oder Amide dieser Fettsäuren bei Polyurethanen mit gewünschter verminderter Tendenz zur Aufnahme und/oder Abgabe von Substanzen eingesetzt, wobei die Fettsäuren und/oder deren Derivate in einen Gewichtsanteil von 0,001 Gew.-% bis 15 Gew.-%, bezogen auf das Gesamtgewicht der Polyisocyanat-Polyadditionsprodukte, eingesetzt werden.

In einer weiteren bevorzugten Ausführungsform wird eine Mischung gemäß EP-A-1826225 aus den Umsetzungsprodukten von Alkylendiaminen mit a) einer oder mehreren linearen Fettsäuren und von Alkylendiaminen mit b) 12-Hydroxystearinsäure und/oder aus den Umsetzungsprodukten von Alkylendiaminen mit c) 12-Hydroxystearinsäure und einer oder mehreren linearen Fettsäuren eingesetzt. Diese Mischung enthält also die Umsetzungsprodukte von Alkylendiamin mit den Komponenten a) und b) undggf. c).

Nähere Angaben über die oben genannten Hilfsmittel- und Zusatzstoffe sind der Fachliteratur zu entnehmen, z. B. aus Plastics Additive Handbook, 5th edition, H. Zweifel, ed, Hanser Publishers, München, 2001. Alle in dieser Schrift genannten Molekulargewichte weisen die Einheit [g/mol] auf und sind, sofern nichts anderes angegeben ist, die zahlenmittleren Molekulargewichte.

In einer weiteren bevorzugten Ausführungsform sind die Dicarbonsäure und/oder das Diol des Polyesterdiols und/oder der Kettenverlängerer nicht-fossilen Ursprungs.

Marktseitig werden zunehmend Polyurethanprodukte mit teilweiser oder vollständiger Substitution der petrochemischen Rohstoffe durch solche aus nachwachsenden Quellen nachgefragt. Sebazinsäure ist ein nachwachsender Rohstoff, der zum Beispiel aus Pflanzenöl (Rizinusöl) erhalten wird. Allerdings zeigen Sebazinsäureester eine für viele Anwendungen unerwünschte Kristallisation, so dass sie für viele Anwendungen nicht in Frage kommen. So ist aus US-A-5 695884 die Verwendung von Polyesterpolyolen auf Basis von Sebazinsäure für thermoplastische Polyurethane mit hoher Kristallinität bekannt. Auch US 2006/0141883 A1 und US 2006/0121812 beschreiben die Verwendung von Polyesterpolyolen auf Basis von Sebazinsäure für Polyurethane für Fasern mit einem hohen Schmelzpunkt. In der WO 00/51660 A1 werden Polyurethane für Herzkatheder beschrieben, bei denen Polyesterpolyole auf Basis von Sebazinsäure eingesetzt werden können; auch hierbei ist eine ausreichende Härte erforderlich. Aus US 2007/0161731 A1 und US 6395833 B1 ist weiterhin bekannt, für die Herstellung von Polyesterpolyolen zur Anwendung in der Polyurethanchemie Sebazinsäure einzusetzen.

Erfindungsgemäß beträgt die Gesamtkennzahl des TPU 1,0 bis 1,2. Durch die Umsetzung mit dem Isocyanat oder dem Isocyanat Prepolymer wird das Molekulargewicht des TPU bis zur geeigneten Prozessfähigkeit vermindert. Das zahlenmittlere Molekulargewicht beträgt dabei unmittelbar vor der Umsetzung mit dem PLA vorzugsweise 7.500 g/mol bis 75.000 g/mol.

Die Umsetzung in Stufe A) wird vorzugsweise bei einer Temperatur im Bereich von 150 °C bis 230 °C durchgeführt.

Die Reaktionszeit in Stufe A) beträgt vorzugsweise 10 Sekunden bis 100 Sekunden.

Das Einbringen des Polylactids in die Schmelze des Produktes der Stufe A) und die nachfolgende Umsetzung erfolgen bei einer Temperatur von weniger als 190 °C, besonders bevorzugt bei einer Temperatur im Bereich von 170 °C bis 185 °C. Die Temperatur wird vorzugsweise bei Werten gehalten, in denen keine Verfärbung des Polylactids einsetzt. Die Temperatur sollte jedoch deutlich über dem Erweichungspunkt des Polylactids und über dem Erweichungspunkt des Produktes aus Stufe A) liegen. Vorzugsweise wird eine intensive Vermischung durchgeführt, wie sie beispielsweise mit einem Reaktionsextruder erreicht werden kann.

Das PLA reagiert dabei mit den Isocyanatgruppen wodurch kovalente Bindungen im Blend entstehen. Hierdurch wird eine Molmassenerhöhung erreicht, die wiederum eigenschaftsverbessernd ist.

Nach der Umsetzung wird der gebildete Blend abgekühlt und beispielsweise granuliert, direkt in Form gebracht oder in eine geeignete Form für die Weiterverarbeitung gebracht.

Der Anteil an Isocyanatgruppen im Produkt der Stufe A) beträgt 0,1 Gew.-% bis 5 Gew.-%, vorzugsweise 0,3 Gew.-% bis 3 Gew.-%.

Im erfindungsgemäßen Verfahren werden in den Stufen A) bis C) keine Polyole zugesetzt, so dass es nicht zu einem Aufbau eines TPU aus Polyol und Diisocyanat kommt. Ziel der Umsetzung in Stufe A) ist gerade, das TPU in seiner Molmasse zu vermindern und den Gehalt an Isocyanatgruppen zu erhöhen.

Die Umsetzung in Stufe B) wird vorzugsweise innerhalb eines Zeitraumes von 10 Sekunden bis 180 Sekunden durchgeführt.

Die Erfindung betrifft zudem auch ein Blend, das nach vorstehend beschriebenen Verfahren herstellbar ist.

Die erfindungsgemäßen Blends können für beliebige geeignete Anwendungen eingesetzt werden. Sie werden insbesondere zur Herstellung von Folien (Flächenprodukten) oder Formkörpern eingesetzt.

Sehr dünne Folien sind erfindungsgemäß aus den Blends zugänglich, so dass bei Einsatz entsprechender Monomere eine gute Bioabbaubarkeit erreicht werden kann. Dies kann insbesondere für Müllbeutel, Pflanzbeutel, Agrar- bzw. Mulchfolien usw. vorteilhaft sein.

Als Polylactide können erfindungsgemäß alle geeigneten Polylactide eingesetzt werden. Polylactide werden auch Polymilchsäuren genannt. Sie zählen zu den Polyhydroxysäuren. PLA-Werkstoffe entspringen einer Polykondensationsreaktion, ausgehend von Milchsäure oder einer Ringöffnungspolymerisationsreaktion, ausgehend von dem ringförmigen Dimeren zweier Milchsäuremoleküle, dem Lactid. Polylactide werden typischerweise durch die Ringöffnungspolymerisation von Lactid hergestellt. Die Umsetzung wird typischerweise bei Temperaturen von 140 °C bis 180 °C unter Zusatz katalytischer Zinnverbindungen durchgeführt. Es können Polylactide mit einer hohem Molmasse und hoher Festigkeit erhalten werden.

Milchsäure selbst lässt sich durch Vergärung von Melasse oder durch Fermentation von Glucose mit Hilfe unterschiedlicher Bakterien herstellen. Lactide entstehen durch Dimerisierung der Milchsäure. Darüber hinaus können hochmolekulare Polylactide mit Hilfe der Polykondensation direkt aus Milchsäure erzeugt werden.

Die Verarbeitung der erfindungsgemäßen Blends, die üblicherweise als Granulat vorliegen, können nach den üblichen Verfahren Spritzguss und Extrusion verarbeitet werden. Die nach dem erfindungsgemäßen Verfahren herstellbaren Blends zeigen in Anwendungen als Folien (Flächenprodukten), bevorzugt zur herstellung von Beschichtugnen, Faltbälge, Formteilen, Fußböden für Gebäude und Transport, Kabel, Kabelstecker, Kabelummantelungen, Kissen, Laminate, non woven Geweben, Dichtungen, Profilen, Riemen, Rollen, Sättel, Schäume, Schläuchen, Schuhsohlen, Schleppkabel, Solarmodule, Verkleidung in Automobilen, Wischerblätter oder Fasern weisen die eingangs dargestellten Vorteile auf. Die Formgebung zu Formkörpern/Teilen und Halbzeugen kann auch in direkter Verbindung mit dem Compoundierschritt in Form eines Einstufenprozesses erfolgen, z. B. mit einem Spritzgießcompounder (IMC). Weitere bevorzugte Herstellungsverfahren sind Kalendrieren, Pulversintern, oder Extrusion. Entsprechende faserverstärkte Compounds bestehen aus den die vorstehenden Blends und Fasern.

### Beispiele:

Die Erfindung wird durch die nachstehenden Beispiele näher erläutert. In den nachstehend beschriebenen Beispielen eingesetzte Einzelkomponenten werden mit Komponente Ki bezeichnet, wobei der Buchstabe "i" ein Platzhalter für eine Zahl ist.

### Beispiel 1:

### Komponente K1: TPU 1 Elastollan® LP 9273

Aliphatisches Polyester-TPU basierend auf Butandiol-Hexandiol-Adipat mit einer zahlenmittleren Molmasse 2,2 kg/mol, Hexandiol-1,6 und Hexandiisocyanat. Enthaltend Stabilisatoren (UV-Absorber, HALS, Antioxidationsmitteln, Hydrolyseschutzmittel) und Verarbeitungshilfsmitteln (Gleitmittel, Wachse) in üblichen Konzentrationen. Das In Granulatform vorliegende TPU wird im Spritzguss zu Testplatten umgeformt und daraus Prüfkörper ausgestanzt. An diesen Prüfkörpern werden die nachfolgenden Merkmale gemessen.

| Merkmal | | Einheit | Wertebereich | Prüfverfahren in Anlehnung an |
|---|---|---|---|---|
| Härte | | Shore A | 84 | DIN 53505 |
| Dichte | | g/cm³ | 1,14 | DIN EN ISO 1183-1-A |
| Zugfestigkeit | | MPa | 18 | DIN 53504-S2* |
| Reißdehnung | | % | 750 | DIN 53504-S2* |
| Weiterreißwiderstand | | N/mm | 50 | DIN ISO 34-1 Bb |
| Kerbschlagzähigkeit | | | | |
| (Charpy) | + 23°C | kJ/m² | kein Bruch | DIN EN ISO 179-1 |
| | | kJ/m² | kein Bruch | DIN EN ISO 179-1 |
| | - 30°C | | | |
| Druckverformungsrest bei Raumtemperatur | | % | 36 | DIN ISO 815** |
| Druckverformungsrest bei 70°C | | % | 39 | DIN ISO 815** |

| | | | | |
|---|---|---|---|---|
| Die Testplatten wurden gespritzt aus Granulat mit weniger als 0,02 % Wassergehalt. Die Testplatten wurden 20 Stunden bei 100 °C getempert. Die Probekörper wurden aus 2 mm* bzw. 6 mm** starken Testplatten gestanzt. Die Prüfung wurde bei 23 ± 2 °C und 50 ± 6 % rel. Luftfeuchte durchgeführt. | | | | |

### Beispiel 2:

### Komponente K2: TPU2 Elastollan® B 85 A 15

Aromatisches Polyester-TPU basierend auf Butandiol-Adipat mit einer Zahlenmittleren Molmasse 2,4 kg/mol, Butandiol1,4 und Methyl-di-Phenyl-di-Isocyanat. Enthaltend Hydrolyseschutzmittel und Verarbeitungshilfsmittel in üblichen Konzentrationen. Das In Granulatform vorliegende TPU wird im Spritzguss zu Testplatten umgeformt und daraus Prüfkörper ausgestanzt. An diesen Prüfkörpern werden die nachfolgenden Merkmale gemessen.

| Merkmal | Einheit | Wertebereich | Prüfverfahren in Anlehnung an |
|---|---|---|---|
| Härte | Shore A | 83 | DIN 53505 |
| Dichte | g/cm³ | 1,20 | DIN EN ISO 1183-1-A |
| Zugfestigkeit | MPa | 55 | DIN 53504-S2* |
| Reißdehnung | % | 600 | DIN 53504-S2* |
| Spannung bei 20% Dehnung | MPa | 2 | DIN 53504-S2* |
| Spannung bei 100% Dehnung | MPa | 4 | DIN 53504-S2* |
| Spannung bei 300% Dehnung | MPa | 15 | DIN 53504-S2* |
| E-Modul aus Zugversuch | MPa | | DIN EN ISO 527 |
| Weiterreißwiderstand | N/mm | 75 | DIN ISO 34-1 Bb |
| Abrieb | mm³ | 35 | DIN ISO 4649-A |
| Druckverformungsrest bei Raumtemperatur | % | 25 | DIN ISO 815** |
| Druckverformungsrest bei 70°C | % | 35 | DIN ISO 815** |
| Zugfestigkeit bei 21 tägiger Lagerung im Wasser von 80°C | MPa | 40 | DIN 53504-S2* |
| Reißdehnung bei 21 tägiger Lagerung im Wasser von 80°C | % | 600 | DIN 53504-S2* |
| Kerbschlagzähigkeit (Charpy) | | | |
| + 23°C | kJ/m² | kein Bruch | DIN EN ISO 179-1 |
| - 30°C | kJ/m² | kein Bruch | DIN EN ISO 179-1 |

| | | | |
|---|---|---|---|
| Die Testplatten wurden gespritzt aus Granulat mit weniger als 0,02 % Wassergehalt. Die Testplatten wurden 20 Stunden bei 100 °C getempert. Die Probekörper wurden aus 2 mm* bzw. 6 mm** starken Testplatten gestanzt. Die Prüfung wurde bei 23 ± 2 °C und 50 ± 6 % rel. Luftfeuchte durchgeführt. | | | |

### Beispiel 3

### Komponente K3: TPU3 Elastollan® C 78 A 10

Aromatisches Polyester-TPU basierend auf Butandiol-Hexandiol-Adipat mit einer Zahlenmittleren Molmasse 2,4 kg/mol, Butandiol1,4 und Methyl-di-Phenyl-di-Isocyanat. Enthaltend Hydrolyseschutzmittel in üblichen Konzentrationen. Das In Granulatform vorliegende TPU wird im Spritzguss zu Testplatten umgeformt und daraus Prüfkörper ausgestanzt. An diesen Prüfkörpern werden die nachfolgenden Merkmale gemessen.

| Merkmal | | Einheit | Wertebereich | Prüfverfahren in Anlehnung an |
|---|---|---|---|---|
| Härte | | Shore A | 80 | DIN 53505 |
| Dichte | | g/cm³ | 1,18 | DIN EN ISO 1183-1-A |
| Zugfestigkeit | | MPa | 50 | DIN 53504-S2* |
| Reißdehnung | | % | 650 | DIN 53504-S2* |
| Spannung bei 20% Dehnung | | MPa | 2 | DIN 53504-S2* |
| Spannung bei 100% Dehnung | | MPa | 4 | DIN 53504-S2* |
| Spannung bei 300% Dehnung | | MPa | 7,5 | DIN 53504-S2* |
| Weiterreißwiderstand | | N/mm | 60 | DIN ISO 34-1Bb |
| Abrieb | | mm³ | 30 | DIN ISO 4649-A |
| Druckverformungsrest bei Raumtemperatur | | % | 25 | DIN ISO 815** |
| Druckverformungsrest bei 70°C | | % | 35 | DIN ISO 815** |
| Zugfestigkeit bei 21 tägiger Lagerung im Wasser von 80°C | | MPa | 35 | DIN 53504-S2* |
| Reißdehnung bei 21 tägiger Lagerung im Wasser von 80°C | | % | 650 | DIN 53504-S2* |
| Kerbschlagzähigkeit | | | | |
| (Charpy) | + | | | |
| 23°C | | kJ/m² | kein Bruch | DIN EN ISO 179-1 |
| | - | kJ/m² | kein Bruch | DIN EN ISO 179-1 |
| 30°C | | | | |

| | | | | |
|---|---|---|---|---|
| Die Testplatten wurden gespritzt aus Granulat mit weniger als 0,02 % Wassergehalt. Die Testplatten wurden 20 Stunden bei 100 °C getempert. Die Probekörper wurden aus 2 mm* bzw. 6 mm** starken Testplatten gestanzt. Die Prüfung wurde bei 23 ± 2 °C und 50 ± 6 % rel. Luftfeuchte durchgeführt. | | | | |

### Beispiel 4:

### Komponente K4: PLA1

Das gewählte Poly-D,L-Lactid (PLLDA) ist im Zuge einer Ringöffnungspolymerisation aus einem L-Lactid-Anteil von ca. 92% und einem D-Lactid-Anteil von ca.
8% entstanden. Der gewählte Polylactidtyp ist durch folgende
Stoffwerte gekennzeichnet:

| | | | |
|---|---|---|---|
| Nullviskosität bei 180°C | Pa*s | DIN 1342-1 * | 3000 |
| Zugfestigkeit F_max | MPa | EN ISO 527-2/1A/50 | 68 |
| Dehnung bei F_max | % | EN ISO 527-2/1A/50 | 4,4 |
| Bruchfestigkeit | MPa | EN ISO 527-2/1A/50 | 58 |
| Bruchdehnung | % | EN ISO 527-2/1A/50 | 7 |
| E-Modul | MPa | EN ISO 527-2/1A/50 | 1770 |
| Kerbschlagzähigkeit: | kJ/m² | DIN EN ISO 179-1 | 7 |

| | | | |
|---|---|---|---|
| * Nullviskosität: gemessen mit einem Rotationsrheometer, Typ Rheomertics SR 200 | | | |

### Beispiel 5:

### Komponente K5: Prepolymer1

Lupranat® MP102; Prepolymer auf Basis 4,4'Diphenylmethandiisocyanat (MDI), Dipropylenglykol und einem Polyetherdiol auf Basis Ethylenoxid/Propylenoxid mit Molgewiccht 450 g/mol. Das Prepolymer ist bei Raumtemperatur flüssig dosierbar.

| | | |
|---|---|---|
| NCO - Gehalt: | 23,0 % | |
| Viskosität bei 25°C | 650 mPa*s | nach DIN 53018 |
| Dichte bei 25°C | 1,21 | nach DIN 51757 |

### Beispiel 6:

### Komponente K6: Isophoron-di-isocyanat-Uretdion-Butandiol-Addukt

VESTAGON BF 1540
Ein für Pulverlacke eingesetzter Vernetzer in Flockenform mit Schmelzpunkt 105 - 115 °C, Dichte von 1,07 g/cm³ und einer Rückspaltungstemperatur von 130 - 160 °C.

### Beispiel 7:

Compoundierverfahren 1 zur Generierung der erfindungsgemäßen PLA/TPU-Blends Die in den Beispielen 10 bis 12 aufbereiteten und charakterisierten PLA/TPU-Blends wurden mittels eines gleichsinnig drehenden Zweischneckenextruders, Typ Coperion ZSK 25- L/D=40, Hersteller: Werner & Pfleiderer generiert. Das Compoundieraggregat wurde bei allen Aufbereitungsprozeduren mit einer Schneckendrehzahl von n=100 min-1 und einem Gesamtmassedurchsatz von m = 5,0 kg/h betrieben. Das Temperaturprogramm entlang der Extruderachse ist auch Figur 1 entnehmbar. Die eingestellten Zylindertemperaturen für die Zonen 1 bis 10 lauten: 180°, 200°, 200°, 200°, 200°, 180°, 180°, 180°, 180°, 180°C.

In die Speiseöffnung des Zweischneckenextruders werden gravimetrisch dosiert der jeweilige TPU-Typ (K1 oder K2 oder K3) sowie das jeweilige Additiv (K6) oder das modifizierte MDI (K5) eingebracht. In den Extruderzonen 2 bis 5 erfolgt die TPU-Modifikation. In die Zuspeiseöffnung der Zone 6 wird das PLA-Granulat (K4) zudosiert. In den Folgezonen erfolgt die PLA-Plastifizierung, eine intensive Komponentenvermischung sowie die Kopplungsreaktion zur kovalenten Phasenverknüpfung. Die austretenden Compoundstränge werden abgekühlt und anschließend granuliert.

### Beispiel 8

### Prüfkörperherstellung

Zugstäbe gemäß DIN-EN-ISO 527-2 sowie Prüfkörper zur Bestimmung der Kerbschlagzähigkeit gemäß DIN-EN-ISO 179-1 wurden in einem Werkzeug durch Spritzgießen erzeugt. Dafür stand eine Schneckenkolben-Spritzgieß-Maschine, Typ Arburg 220 M 350-90 zur Verfügung. Die Maschinen- und Prozessparameter stellen sich wie folgt dar:
- maximale Schließkraft = 220 kN
- Schneckengeometrie: D = 20 mm, L/D = 25 (Dreizonenschnecke)
- Gangtiefenverhältnis 2:1
- Temperaturprofil Arburg 220M; konstant 180 °C
- Werkzeugtemperatur 30 °C

### Beispiel 9

### Prüfprozedur

Alle Zugversuche wurden gemäß DIN 53 504 mit einer Prüfgeschwindigkeit von 50 mm/min durchgeführt.

Der Prüfkörper zur Bestimmung der Kerbschlagzähigkeit weist die folgenden Abmessungen auf:

| | Länge | Breite | Dicke | Kerbtiefe |
|---|---|---|---|---|
| | [mm] | [mm] | [mm] | [mm] |
| Typ 1 | 80 | 10 | 4 | 2 |

### Beispiel 10

### Charakterisierung des Blends 1:

PLA1 mit TPU1 unter Zugabe von 3% Isopherondiisocyanat (K6), hergestellt nach Verfahren 1. Das Basiskomponentenverhältnis wurde variiert zwischen 90:10 und 50:50. Tab. 4 enthält die ermittelten mechanischen Kennwerte.

**Tabelle 4: Mechanische Kennwerte der PLA1/TPU1-Blends**

| | | Blendzusammensetzung PLA / TPU | | | | |
|---|---|---|---|---|---|---|
| | | 90 / 10 | 80 / 20 | 70 / 30 | 60 / 40 | 50 / 50 |
| Merkmal | Einheit | | | | | |
| E-Modul | MPa | 1500 | 1200 | 1000 | 700 | 400 |
| Zugfestigkeit | MPa | 55 | 47 | 38 | 30 | 25 |
| Bruchdehnung | % | 10 | 25 | 50 | 80 | 300 |
| Kerbschlagzähigkeit | kJ/m² | 10 | 22 | 65 | 85 | 92 |

### Beispiel 11

### Charakterisierung des Blends 2:

PLA1 mit TPU2 unter Zugabe von 10% Prepolymer 1 (K5), hergestellt nach Verfahren 1. Das Basiskomponentenverhältnis wurde variiert zwischen 70:30 und 50:50. Tab.5 enthält die ermittelten mechanischen Kennwerte.

**Tabelle 5: Mechanische Kennwerte der PLA1/TPU2-Blends**

| | | Blendzusammensetzung PLA / TPU | | |
|---|---|---|---|---|
| | | 70/30 | 60/40 | 50/50 |
| Merkmal | Einheit | | | |
| E-Modul | MPa | 950 | 800 | 520 |
| Zugfestigkeit | MPa | 35 | 33 | 29 |
| Bruchdehnung | % | 110 | 180 | 400 |
| Kerbschlagz. | kJ/m² | 100 | 140 | 140 |

### Beispiel 12

### Charakterisierung des Blends 3:

PLA1 mit TPU3 unter Zugabe von 5% Prepolymer 1 (K5), hergestellt nach Verfahren 1. Das Basiskomponentenverhältnis wurde variiert zwischen 70:30 und 50:50. Tab.6 enthält die ermittelten mechanischen Kennwerte

**Tabelle 6: Mechanische Kennwerte der PLA1/TPU3-Blends**

| | | Blendzusammensetzung PLA / TPU | | |
|---|---|---|---|---|
| | | 70/30 | 60/40 | 50/50 |
| Merkmal | Einheit | | | |
| E-Modul | MPa | 1000 | 800 | 500 |
| Zugfestigkeit | MPa | 35 | 33 | 32 |
| Bruchdehnung | % | 80 | 120 | 350 |
| Kerbschlagz. | kJ/m² | 102 | 142 | 155 |

### Beispiel 12

Aus den Tabellen 1 bis 6 geht die deutliche Absenkung des E-Moduls durch die Blendgenerierung hervor. Gleichzeitig nehmen die Bruchdehnung und die Kerbschlagzähigkeit drastisch zu. Die gestellte Aufgabe wird damit vollumfänglich gelöst.

## Patentansprüche

1. Verfahren zur Herstellung von Blends aus Polylactiden (PLA) und thermoplastischen Polyurethanen (TPU), durch
A) Umsetzung mindestens eines thermoplastischen Polyurethans mit mindestens einem Diisocyanat oder einem Isocyanat - Prepolymer, das mindestens zwei Isocyanatgruppen aufweist, oder Gemische davon, in der Schmelze unter Verminderung der Molmasse des thermoplastischen Polyurethans und unter Ausbildung eines thermoplastischen Polyurethans mit einem Überschuss an Isocyanat-Endgruppen,
B) Einbringen mindestens eines Polylactids in die Schmelze des Produktes der Stufe A) und Umsetzung des Produktes der Stufe A) mit dem Polylactid bei einer Temperatur von unter 190 °C, wobei der Anteil des Polylactids im Gemisch der Stufe B) 50 bis 97 Gew.-% beträgt,
C) Abkühlen des so gebildeten Blends,
wobei in Stufen A) bis C) keine Polyole zugesetzt werden, und
wobei die Gesamtkennzahl des thermoplastischen Polyurethans 1,0 bis 1,2 beträgt.

2. Verfahren nach Anspruch 1, **dadurch gekennzeichnet, dass** in Stufe A), bezogen auf das Produkt der Stufe A), 1 bis 25 Gew.-% des Diisocyanats, Isocyanat-Prepolymers, das mindestens 2 Isocyanatgruppen aufweist, oder eines Gemisches davon, eingebracht werden.

3. Verfahren nach einem der Ansprüche 1 bis 2, **dadurch gekennzeichnet, dass** der Anteil an Isocyanatgruppen im Produkt der Stufe A) 0,1 bis 5 Gew.-%, vorzugsweise 0,3 bis 3 Gew.-% beträgt.

4. Verfahren nach einem der Ansprüche 1 bis 3, **dadurch gekennzeichnet, dass** die Umsetzungen kontinuierlich als Reaktionsextrusion in einem Extruder durchgeführt werden, wobei das thermoplastische Polyurethan und das Diisocyanat, Isocyanat-Prepolymer, das mindestens zwei Isocyanatgruppen, aufweist, oder eines Gemisch davon am Eingang des Extruders und das Polylactid stromabwärts zugesetzt werden.

5. Blend aus Polylactiden (PLA) und thermoplastischen Polyurethanen (TPU), herstellbar nach einem Verfahren gemäß einem der Ansprüche 1 bis 4.

6. Verwendung von Blends nach Anspruch 5 zur Herstellung von Flächenprodukten oder Formkörpern.

7. Flächenprodukte oder Formkörper aus einem Blend gemäß Anspruch 5.

8. Faserverstärktes Compound, enthaltend ein Blend gemäß Anspruch 5 und Fasern.

9. Flächenprodukte, Formkörper und Halbzeuge aus Compounds gemäß Anspruch 8.

## Claims

1. A process for producing blends made of polylactides (PLAs) and of thermoplastic polyurethanes (TPUs), via
A) reaction of at least one thermoplastic polyurethane with at least one diisocyanate or one isocyanate prepolymer which has at least two isocyanate groups, or a mixture thereof, in the melt, with reduction of the molar mass of the thermoplastic polyurethane and with formation of a thermoplastic polyurethane having an excess of isocyanate end groups,
B) introduction of at least one polylactide into the melt of the stage A) product, and reaction of the stage A) product with the polylactide at a temperature below 190°C, where the proportion of the polylactide in the stage B) mixture is from 50 to 97% by weight,
C) cooling of the resultant blend,
where no polyols are added in stages A) to C), and where the total index of the thermoplastic polyurethane is from 1.0 to 1.2.

2. The process according to claim 1, wherein, in stage A), based on the stage A) product, the amount introduced of the diisocyanate or isocyanate prepolymer which has at least 2 isocyanate groups, or of a mixture thereof, is from 1 to 25% by weight.

3. The process according to any of claims 1 to 2, wherein the proportion of isocyanate groups in the stage A) product is from 0.1 to 5% by weight, preferably from 0.3 to 3% by weight.

4. The process according to any of claims 1 to 3, wherein the reactions are carried out continuously in the form of a reactive extrusion process in an extruder, where the thermoplastic polyurethane and the diisocyanate or isocyanate prepolymer which has at least two isocyanate groups, or a mixture thereof, are added at the inlet of the extruder, and the polylactide is added downstream.

5. A blend made of polylactides (PLAs) and of thermoplastic polyurethanes (TPUs), which can be produced by a process according to any of claims 1 to 4.

6. The use of blends according to claim 5 for producing sheet products or moldings.

7. A sheet product or molding made of a blend according to claim 5.

8. A fiber-reinforced compounded material comprising a blend according to claim 5 and fibers.

9. A sheet product, molding, or semifinished product made of compounded materials according to claim 8.

## Revendications

1. Procédé pour la préparation de mélanges de polylactides (PLA) et de polyuréthanes thermoplastiques (TPU), par
A) transformation d'au moins un polyuréthane thermoplastique avec au moins un diisocyanate ou un prépolymère d'isocyanate, qui présente au moins deux groupes isocyanate, ou des mélanges correspondants, à l'état fondu et avec réduction de la masse molaire du polyuréthane thermoplastique et avec formation d'un polyuréthane thermoplastique présentant un excès de groupes terminaux isocyanate,
B) introduction d'au moins un polylactide dans la masse fondue du produit de l'étape A) et transformation du produit de l'étape A) avec le polylactide à une température inférieure à 190 °C, la proportion du polylactide dans le mélange de l'étape B) étant de 50 à 97 % en poids,
C) refroidissement du mélange ainsi obtenu,
aucun polyol n'étant ajouté dans les étapes A) à C), et l'indicateur total du polyuréthane thermoplastique étant de 1,0 à 1,2.

2. Procédé selon la revendication 1, **caractérisé en ce que** 1 à 25 % en poids du diisocyanate, du prépolymère d'isocyanate, qui présente au moins deux groupes isocyanate, ou d'un mélange correspondant, par rapport au produit de l'étape A), sont introduits dans l'étape A).

3. Procédé selon l'une quelconque des revendications 1 et 2, **caractérisé en ce que** la proportion de groupes isocyanate dans le produit de l'étape A) est de 0,1 à 5 % en poids, de préférence 0,3 à 3 % en poids.

4. Procédé selon l'une quelconque des revendications 1 à 3, **caractérisé en ce que** les transformations sont réalisées en continu en tant qu'extrusion réactive dans une extrudeuse, le polyuréthane thermoplastique et le diisocyanate, le prépolymère d'isocyanate, qui présente au moins deux groupes isocyanate, ou un mélange correspondant, sont ajoutés à l'entrée de l'extrudeuse et le polylactide est ajouté en sens contraire du courant.

5. Mélange de polylactides (PLA) et de polyuréthanes thermoplastiques (TPU), pouvant être préparé selon un procédé selon l'une quelconque des revendications 1 à 4.

6. Utilisation de mélanges selon la revendication 5 pour la préparation de produits de surface ou d'articles moulés.

7. Produits de surface ou articles moulés à partir d'un mélange selon la revendication 5.

8. Compound renforcé par des fibres, contenant un mélange selon la revendication 5 et des fibres.

9. Produits de surface, articles moulés et demi-produits à partir des compounds selon la revendication 8.
